# EUROPÄISCHE PATENTSCHRIFT

(11) **EP 1 984 094 B1**
(45) Veröffentlichungstag und Bekanntmachung des Hinweises auf die Patenterteilung: **23.06.2010**
(21) Anmeldenummer: 07711430.4
(22) Anmeldetag: 02.02.2007
(51) Int. Cl.: B01D 46/06, B01D 46/52

(54) **VERWENDUNG EINES FILTERELEMENTS**
USE OF A FILTER ELEMENT
UTILISATION D'UN ELEMENT FILTRANT

(30) Priorität: 15.02.2006 DE 102006007182
(43) Veröffentlichungstag der Anmeldung: 29.10.2008
(73) Patentinhaber: Carl Freudenberg KG, 69469 Weinheim (DE)
(72) Erfinder: PFEUFFER, Peter, 68775 Ketsch (DE); KAFFENBERGER, Rainer, 64385 Reichelsheim (DE)
(86) Internationale Anmeldenummer: PCT/EP2007/000905
(87) Internationale Veröffentlichungsnummer: WO 2007/093291

(56) Entgegenhaltungen:
- EP-A- 0 250 801
- WO-A-2005/051518
- DE-A1- 10 016 182
- DE-C1- 19 604 577
- US-A- 3 622 446
- US-A- 5 230 455

## Beschreibung

### Technisches Gebiet

Die Erfindung betrifft die Verwendung eines Filterelements in der Tiefenfiltration.

### Stand der Technik

Aus der EP 0 250 801 A1, der US 5,230,455 und der US 3,622,446 sind Filterelemente mit versteiften Lagen bekannt. Aus der DE 196 04 577 C1 ist eine Anordnung aus einem Filterelement und einem Rahmen bekannt, wobei der Rahmen mit einer Dichtung versehen ist.

Filterelemente und Anordnungen sind aus dem Stand der Technik bereits bekannt. Die gattungsbildenden Filterelemente finden Verwendung als Taschenfilter, welche in Klimaanlagen und Belüftungseinrichtungen angeordnet werden. Diese Taschenfilter weisen Mittel auf, welche die Lagen voneinander beabstanden und verhindern, dass diese aneinander zur Anlage kommen und somit die Filterwirkung negativ beeinträchtigt wird. Üblicherweise sind die Mittel streifenförmig ausgebildet, mit beiden Lagen durch eine Naht verbunden und weisen im Bereich der Öffnung des Taschenfilters einen Schlitz auf, um eine Aufweitung des Taschenfilters im Öffnungsbereich zu ermöglichen.

Hierdurch ist realisierbar, dass das Filterelement im Bereich der Öffnung aufweitbar ist, während es sich zum der Öffnung abgewandten Ende des Filterelements hin verjüngt. Dies gewährleistet, dass ein Luftstrom großflächig in ein keilförmiges Filterelement eindringen und gefiltert werden kann.

Bei den gattungsbildenden Filterelementen ist jedoch nachteilig, dass die Vorkehrung der streifenförmigen Mittel aufwändige Arbeitsschritte erfordert. Hierdurch wird das Herstellungsverfahren für die bekannten Taschenfilter erheblich verteuert. Nachteilig ist des Weiteren, dass die streifenförmigen Mittel im Betrieb und bei der Fertigung zerreißen oder sich von einer Lage ablösen können. Ein abgelöstes streifenförmiges Mittel verändert im Betrieb die Strömungsverhäitnisse innerhalb des Taschenfilters ungünstig, wenn nämlich das Mittel innerhalb des Taschenfilters quasi lose umher treibt.

### Darstellung der Erfindung

Der Erfindung liegt daher die Aufgabe zu Grunde, eine Filteranordnung anzugeben, welche bei einfacher Fertigung einen einwandfreien Betrieb gewährleistet.

Die vorliegende Erfindung löst die zuvor genannte Aufgabe durch die Merkmale des Patentanspruchs 1.

Danach wird ein Filterelement in der Tiefenfiltration verwendet, wobei das Filterelement, eine erste flächige Lage und eine zweite flächige Lage umfasst, wobei die Lagen miteinander unter Bildung zumindest eines Volumens und zumindest einer Öffnung miteinander verbunden sind, wobei die Lagen durch Mittel voneinander teilweise beabstandet sind, wobei die Mittel aus zumindest einer Lage herausgebildet sind, wobei die Mittel als tiefgezogene Bereiche ausgebildet sind und wobei die Lagen einen progressiven Aufbau aufweisen.

Erfindungsgemäß ist erkannt worden, dass auf ein separates streifenförmiges Mittel verzichtet werden kann, wenn nämlich die Mittel aus der Lage selbst heraus gebildet sind. Hierdurch ist vorteilhaft realisierbar, dass die Mittel während des Betriebs fest an den Lagen verbleiben und sich nicht von diesen lösen können. Dadurch ist sicher gestellt, dass die Strömungsvemältnisse während der gesamten Lebensdauer des Taschenfilters nicht durch lose umher treibende Mittel nachträglich beeinflusst werden. Auch ist realisiert, dass ein Taschenfilter kostengünstig herstellbar ist, da nämlich die beabstandenden Mittel problemlos aus den verwendeten Lagen ausgebildet werden können. Insoweit ist eine Filteranordnung realisierbar, welche bei einfacher Fertigung einen einwandfreien Betrieb gewährleistet.

Die Mittel sind als tiefgezogene Bereiche ausgebildet. Ein Tiefziehprozess erlaubt die Ausbildung von Strukturen innerhalb der Lage selbst. Beim Tiefziehen wird Material erwärmt und umgeformt. Tiefziehprozesse erlauben eine Versteifung der Lagen, so dass das geschaffene Filterelement eine hohe Eigensteifigkeit aufweist und daher problemlos in Rahmen oder Hohlräume einfügbar ist. Hierdurch ist auch realisiert, dass die Lagen ständig, nämlich auch im nicht durchströmten Zustand, beabstandet sind und ein problemloses Eindringen eines Fluidstroms zulassen. Die aus dem Stand der Technik bekannten streifenförmigen Mittel können diese Wirkung nicht erzielen, hatten nämlich die Lagen nicht ständig auf einem Mindestabstand, so dass der durchtretende Fluidstrom im Betrieb die Lagen erst voneinander beabstanden muss, um in das durch die Lagen gebildete Volumen einzutreten. Dies führt zu einem nachteiligen und unerwünschten Durchströmungsverhalten des Filterelements.

Die hier beschriebenen Lagen weisen einen progressiven Aufbau auf, um in der Tiefenfiltration Verwendung zu finden. Ein progressiver Aufbau zeichnet sich dadurch aus, dass in einer Richtung zunächst grobe Poren und dann feine Poren in einer Filterschicht vorgesehen sind.

Folglich ist die eingangs genannte Aufgabe gelöst.

In einer konstruktiv besonders günstigen Ausgestaltung könnten die Mittel aus beiden Lagen heraus gebildet sein. Dies erlaubt die Schaffung eines besonders großen Volumens und eine sichere Beabstandung der Lagen voneinander. Hierdurch können zwischen zwei Lagen Kammern geschaffen werden, welche eine besonders große lichte Weite aufweisen und dadurch problemlos durchströmbare Kanäle ausbilden.

In einer weiteren Ausgestaltung könnten die Mittel die Lagen zumindest bereichsweise miteinander verbinden. Hierdurch ist sicher gestellt, dass die Mittel zwei innerhalb der Lagen gebildete Kammern strömungsdicht von einander abtrennen. Vor diesem Hintergrund ist denkbar, dass die Lagen im Bereich der Öffnung nicht verbunden sind, so dass eine Aufweitung des Filterelements im Bereich der Öffnung möglich ist. Die Verbindung der Lagen miteinander kann durch einen Klebeprozess oder durch thermische Prozesse erfolgen. Ein Klebeprozess erlaubt den Einsatz flexibler Kleber, welche auch nach dem Aushärten eine ausreichende Flexibilität aufweisen. Die Verwendung eines solchen Klebers realisiert vorteilhaft, dass die Klebestellen auch bei Verwindungen und Deformierungen des Filterelements nicht beschädigt werden. Eine thermische Verbindung der Lagen miteinander, beispielsweise durch Aufschmelzen thermoplastischer Anteile der Lagen, erlaubt eine besonders rasche Fertigung des Filterelements. Darüber hinaus sorgt eine Verklebung oder Verschweißung der Lagen für eine Erhöhung deren Steifigkeit, wodurch das Durchströmungsverhalten des Filterelements verbessert wird.

Die Mittel könnten als flächige Elemente ausgebildet sein. Die Vorkehrung flächiger Elemente erlaubt eine problemlose Fertigung und die Bildung von definierten Luftströmungskanälen innerhalb des Filterelements. Die Ausbildung von Kanälen erlaubt eine gerichtete und verwirbelungsfreie Führung eines zu filternden Luftstroms.

Die Mittel könnten als dreidimensionale Strukturen ausgebildet sein, welche aus einer ebenen, flächigen Lage herausragen. Diese konkrete Ausgestaltung erlaubt die Einstellung der lichten Weite der zwischen den Lagen geschaffenen Kammern. Ganz in Abhängigkeit von der Größe oder der geometrischen Form der Strukturen können Kammern bzw. Kanäle beliebiger Querschnittsform geschaffen werden. Es ist sogar denkbar, die dreidimensionalen Strukturen so auszubilden, dass sie in Strömungsrichtung eine Verjüngung der Kammern bzw. Kanäle bewirken.

Die Mittel könnten bogenförmig ausgebildet sein. Diese konkrete Ausgestaltung ist im Hinblick auf die Fertigung des Filterelements vorteilhaft, da eine Bogenform problemlos durch beheizbare Walzen oder Rollensysteme in eine flächige Lage einbringbar ist. Einer flächigen Lage können bogenförmige Strukturen insbesondere dadurch aufgeprägt werden, dass zwei Prägeplattformen mit abragenden, erwärmbaren länglichen Elementen, welche abgerundete, bogenförmige Oberflächen aufweisen, die Lage zwischen sich einschließen. Die länglichen Elemente strecken bzw. ziehen die Lage in Zwischenräume, die zwischen den versetzt zueinander angeordneten Elementen gebildet werden. Durch die erwärmte Elemente wird thermoplastisches Fasermaterial erwärmt und umgeformt bzw. deformiert. Nach Erkalten des Fasermaterials wird die Deformierung quasi eingefroren. Hierbei wird der Lage durch einen Tiefziehprozess ein wellenförmiges bzw. bogenförmiges Muster zugeordnet. Darüber hinaus ist die Bogenform vorteilhaft, da zwei Lagen, welche bogenförmige Mittel aufweisen, Kanäle definieren können, welche im Querschnitt eine Kreisform oder Ellipsenform aufweisen. Diese geometrische Form bewirkt besonders günstige Strömungsverhältnisse.

Die Lagen könnten aus Vliesstoff gefertigt sein. Dabei ist denkbar, dass der Vliesstoff aus Stapelfasern, Nanofasem, Mikrofasern oder elektrostatisch aufgeladenen Fasern besteht. Die Verwendung eines Vliesstoffes ermöglicht besonders gute Filterleistungen, da ein Vliesstoff auf Grund seiner einstellbaren Porosität an unterschiedlichste Anforderungsprofile anpassbar ist. Der Vliesstoff könnte thermoplastische Fasern umfassen. Vor diesem Hintergrund ist denkbar, dass der Vliesstoff nur einen definierten Anteil an thermoplastischen Fasern aufweist, der ausreichend ist, um den Lagen durch thermische Behandlung eine Struktur oder Eigensteifigkeit zu verleihen.

Die Vorkehrung thermoplastischer Fasern erlaubt ein thermisches Prägen oder Tiefziehen einer Lage und die Verleihung einer Formstabilität, wenn die thermoplastischen Fasern rekristallisieren bzw. erstarren. Vor diesem Hintergrund könnten die Filterelemente dadurch gefertigt werden, dass zunächst eine Lage als Halbzeug einem thermischen Prozess unterworfen wird und danach mit einer weiteren Lage, die als Gleichteil ausgebildet sein kann, zusammengefügt wird.

Vor diesem Hintergrund ist denkbar, dass der Vliesstoff Aktivkohle oder Aktivkohlegranulat umfasst oder dem Vliesstoff eine oder mehrere Lagen zugeordnet sind, die Aktivkohle oder Aktivkohlegranulat umfassen. Diese konkrete Ausgestaltung erlaubt die Filterung unangenehmer Gerüche oder gasförmiger Verunreinigungen aus dem Luftstrom. Diese Ausführungsform könnte insbesondere in Klimaanlagen von Gebäuden, Schiffen oder Automobilen Verwendung finden, da dort hohe Anforderungen an die Qualität des Raumklimas gestellt werden.

Die Lagen könnten rechteckig oder trapezförmig ausgebildet und an drei Seiten miteinander verbunden sein. Diese Ausgestaltung stellt einen besonders einfachen Aufbau des Filterelements sicher. Des Weiteren ist hierdurch ein sackähnliches, keilförmiges Gebilde realisierbar, in dem ein Luftvolumen zur Filterung eingefangen werden kann.

Die Lagen und/oder die Mittel könnten miteinander verschweißt sein. Bei einem Schweißprozess werden die Materialien, aus denen die Lagen bestehen, an- oder aufgeschmolzen, so dass einzelne Materialschichten ineinander fließen können. Dies könnte durch Ultraschallschweißen erreicht werden. Diese konkrete Ausgestaltung erlaubt einen besonders festen Verbund von Vliesstoffen miteinander. Darüber hinaus ist eine Naht, welche durch Ultraschallschweißen hergestellt ist, üblicherweise **dadurch gekennzeichnet, dass** sie eine erhöhte Materialdichte aufweist und somit dem Filterelement eine Stabilität verleihen kann. Eine ultraschallgeschweißte Naht gewährleistet auch eine besondere Gasdichtheit im Bereich der Naht. Ganz in Abhängigkeit von der gewünschten Stabilität könnten mehrere Nähte vorgesehen sein, um dem Filterelement bereichsweise eine erhöhte Stabilität zu verleihen. Dabei ist insbesondere denkbar, dass die ultraschallgeschweißten Nähte als Stützelemente fungieren.

Vor diesem Hintergrund könnten die Lagen und/oder die Mittel auch durch Laserschweißen miteinander verbunden sein. Ein Laserschweißprozess zeichnet sich dadurch aus, das Nähte besonders exakt und schnell erzeugt werden können. Darüber hinaus ist durch einen Laserschweißprozess die punktuelle Festlegung unterschiedlicher Teile des Filterelements aneinander realisierbar.

Denkbar sind auch Schweißprozesse, die unter Anwendung von Mikrowellen oder anderen elektromagnetischen Hochfrequenzwellen durchgeführt werden. Diese Prozesse erlauben eine sehr schnelle Erwärmung von zu verschweißendem Material und eine problemlose Dosierung der Energiebeaufschlagung des Materials.

Die Lagen könnten miteinander verklebt sein. Hierbei ist die Verwendung eines nach Erhärten flexiblen Klebers denkbar, wodurch das Filterelement beim Einsetzen in Einbauräume zerstörungsfrei deformierbar ist. Ein Klebeprozess ist kostengünstig durchführbar und realisiert eine hohe Gasdichtheit an den Klebestellen.

Der Rahmen und das Filterelement könnten unlösbar miteinander verbunden sein. Hierdurch ist eine stabile Anordnung realisierbar. Vor diesem Hintergrund könnte das Filterelement in den Rahmen eingegossen oder eingeschäumt sein oder Filterelement und Rahmen könnten einstückig ausgestaltet sein.

Denkbar ist auch, dass das Filterelement in einen Rahmen eingeklemmt ist. Dabei könnten die Rahmenteile aus Kunststoff oder Metall gefertigt sein. Die Rahmenteile könnten im Sinne einer Nut-Feder-Verbindung zusammenfügbar sein, wobei das Filterelement zwischen die Rahmenteile eingeklemmt wird. Diese Ausgestaltung erlaubt eine rasche Montage einer Anordnung vor Ort.

Dem Traggestell des Rahmens könnte mindestens eine Dichtung zugeordnet sein. Die werksseitige Anordnung einer Dichtung realisiert, dass beim Einbau des Rahmens in eine Halterung keine zusätzliche Montageschritte notwendig sind. Durch die Vorkehrung einer bereits werksseitig festgelegten Dichtung entfallen Montageschritte wie Verkleben der Dichtung mit dem Rahmen und passgenaues Ausrichten der Dichtung.

Das Traggestell und die Dichtung könnten einstückig ausgebildet sein. Dabei ist denkbar, dass die Dichtung als verjüngter Bereich des Traggestells ausgebildet ist. Insbesondere könnte die Dichtung als Dichtlippe ausgebildet sein, welche sich auf Grund ihrer Materialstärke leicht deformieren und an eine Fläche anpressen läuse. Diese konkrete Ausgestaltung erlaubt einen materialeinheitlichen Aufbau des Traggestells und gewährleistet eine besondere Dichtheit, da auf Grenzflächen zwischen der Dichtung und dem Traggestell verzichtet werden kann.

Mindestens eine Dichtung könnte formschlüssig mit dem Traggestell verbindbar sein. Die formschlüssige Verbindung erlaubt eine Festlegung der Dichtung, ohne einen Klebstoff zu verwenden. Durch die Vorkehrung einer Dichtungsaufnahme ist es dem Monteur möglich, eine Dichtung problemlos und definiert genau so anzuordnen, wie dies für eine optimale Dichtheit notwendig ist.

Vor diesem Hintergrund könnte das Traggestell eine Ausnehmung zum Einpressen der Dichtung aufweisen. Die Ausnehmung könnte als Rechtecknut oder schwalbenschwanzförmige Nut ausgestaltet sein. Dabei könnte eine massive kompressible Dichtung derart in die Nut eingepresst werden, dass diese formschlüssig mit dem Traggestell verbunden ist.

Das Traggestell könnte aus mindestens einem geschäumten Werkstoff bestehen. Diese konkrete Ausgestaltung erlaubt das Einschäumen eines Filterelements in das Traggestell bei gleichzeitiger Fertigung des Traggestells. Hierdurch ist eine besondere Dichtheit zwischen Traggestell und Filterelement gewährleistet. Als Werkstoff für den Schäumprozess könnte Polyurethanschaum dienen, da dieses Material kostengünstig und gut verarbeitbar ist.

Das Traggestell könnte aus mindestens einem spritzgegossenen Werkstoff bestehen. Dabei ist denkbar, dass das Traggestell aus zwei Komponenten besteht, welche aneinander gespritzt werden. Das Traggestell könnte hierbei aus einem steiferen und eine einstückig angespritzte Dichtung aus einem weicheren Material bestehen. Denkbar ist hierbei, dass das Traggestell aus Polyamid und die angespritzte Dichtung aus einem thermoplastischen Elastomer besteht. Bei diesem Verfahren ist ebenfalls vorteilhaft realisierbar, dass das Traggestell mit dem Filterelement materialschlüssig verbindbar ist, so dass eine besondere Dichtheit zwischen Traggestell und Filterelement gewährleistet ist.

Das Traggestell könnte aus Vliesstoff bestehen. Dabei ist denkbar, dass der Vliesstoff durch thermische Behandlung in seiner Struktur derart verfestigt ist, dass er die notwendige Steifigkeit zur wirksamen Fixierung eines Filterelements in einer Halterung aufweist. Diese konkrete Ausgestaltung erlaubt einen materialeinheitlichen Aufbau einer Anordnung aus Rahmen und Filterelement. Insbesondere ist vor diesem Hintergrund denkbar, dass mehrere Filterelemente nebeneinander angeordnet werden und miteinander durch thermische Behandlung derart verpresst werden, dass durch deren aneinander liegende Öffnungsbereiche ein Traggestell definiert wird.

Der Rahmen könnte ein Traggestell umfassen, welches rechteckig ausgebildet ist. Diese konkrete Ausgestaltung erlaubt eine schachbrettartige Anordnung mehrerer Traggestelle in einem so genannten Filterhaus, wo in mehreren Reihen und Spalten Traggestelle mit Filterelementen nebeneinander und übereinander angeordnet sind. Üblicherweise sind die Traggestelle quadratisch ausgebildet.

Das Traggestell könnte Streben umfassen. Dabei ist insbesondere denkbar, dass die Streben und das Traggestell einstückig in Form eines Gitters ausgestaltet sind. Die Streben erlauben vorteilhaft die Verbindung des Traggestells mit den flächigen Lagen eines Filterelements. Durch die Streben ist sicher gestellt, dass mehrere Filterelemente nebeneinander angeordnet werden können, wobei die Filterelemente durch einen Verbund zwischen Streben und flächigen Lagen fixiert werden.

Alle im Zusammenhang mit der Anordnung ausgeführten Ausgestaltungen des Traggestells sind auch bei einem isolierten Rahmen denkbar, welcher ein solches Traggestell umfasst. Insoweit ist auch ein Rahmen als solcher unabhängig von der Anordnung und dem Filterelement angegeben, der ein Traggestell nach einer der beschriebenen Ausführungen umfassen kann.

Eine Lage könnte tiefgezogene Bereich aufweisen. Lagen, welche tiefgezogene Bereiche aufweisen, zeichnen sich durch eine besondere Biegesteifigkeit und ein hohes Widerstandsmoment gegen Verwindungen auf. Diese Lagen können Verwendung in der Fertigung von Atemschutzmasken, Sternfiltern für die Flüssigkeitsfiltration oder Kassettenfiltern finden, da diese Produkte bereichsweise eine hohe Verwindungssteifigkeit aufweisen müssen, um deren Gebrauchstauglichkeit sicher zu stellen.

Des Weiteren können Lagen mit tiefgezogenen Bereichen zick-zack-förmig gefaltet sein, um deren effektive Filterfläche zu erhöhen. Solche Lagen können in Kassettenfiltern Anwendung finden. Hierbei könnten die tiefgezogenen Bereiche eine ausreichend hohe Steifigkeit aufweisen, um eine Beabstandung der Faltenkanten bzw. gefalteter Lagenbereiche im Betrieb sicher zu stellen. Die Faltung kann durch tiefgezogene Linienstrukturen erleichtert und die Position der Faltenkanten vorgegeben werden, wenn nämlich die Linienstrukturen die Faltenkanten ausbilden.

Einer flächigen Lage können tiefgezogene Bereiche dadurch aufgeprägt werden, dass zwei Prägeplattformen die Lage zwischen sich aufnehmen. Die Prägeplattformen könnten abragende, erwärmbare längliche Elemente aufweisen, welche abgerundete, bogenförmige Oberflächen aufweisen. Die länglichen Elemente strecken bzw. ziehen die erwärmte Lage beim Zusammenführen der Prägeplattformen in Zwischenräume, die zwischen den versetzt zueinander angeordneten Elementen gebildet werden. Durch die erwärmten Elemente wird thermoplastisches Fasermaterial erweicht und deformiert. Nach Erkalten des Fasermaterials wird die Deformierung quasi eingefroren. Hierbei wird der Lage durch einen Tiefziehprozess ein wellenförmiges bzw. bogenförmiges Muster zugeordnet. Zugleich können während eines Tiefziehprozesses Linienstrukturen auf die Lage aufgebracht werden, um eine Faltung der Lage zu erleichtern.

Die hier beschriebenen Lagen können neben thermoplastischen Fasern auch Zellulosefasern umfassen. Zellulosefasern zeichnen sich durch einen günstigen Preis aus. Des Weiteren können Aramidfasern beigemengt sein, welche sich durch eine hohe Temperaturstabilität auszeichnen.

Es gibt nun verschiedene Möglichkeiten, die Lehre der vorliegenden Erfindung in vorteilhafter Weise auszugestalten und weiter zu bilden. Dazu ist einerseits auf die nachgeordneten Ansprüche, andererseits auf die nachfolgende Erläuterung bevorzugter Ausführungsbeispiele des erfindungsgemäßen Filterelements bzw. der Anordnung zu verweisen. In Verbindung mit der Erläuterung der bevorzugten Ausführungsbeispiele anhand der Zeichnung werden auch im Allgemeinen bevorzugte Ausgestaltungen und Weiterbildungen der Lehre erläutert.

### Kurzbeschreibung der Zeichnung In der Zeichnung zeigen

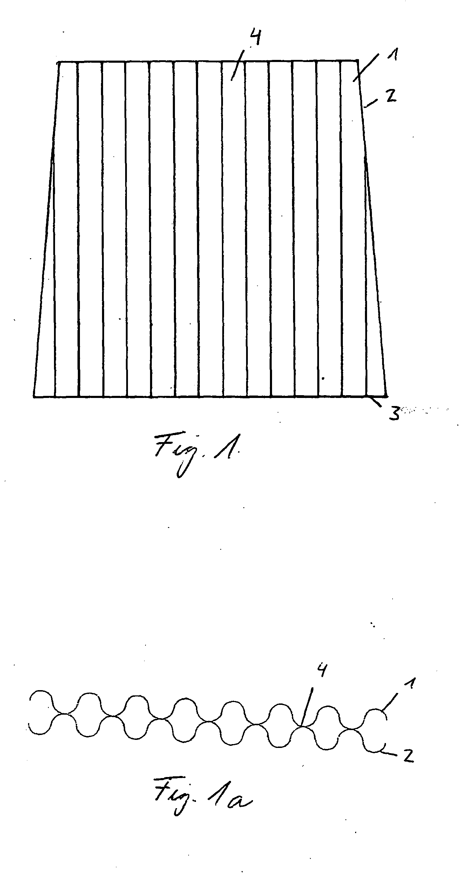

- Fig. 1: in einer Draufsicht ein Filterelement mit bogenförmig ausgebildeten Mitteln,
- Fig. 1a: eine Querschnittsansicht des Filterelements gemäß Fig. 1,

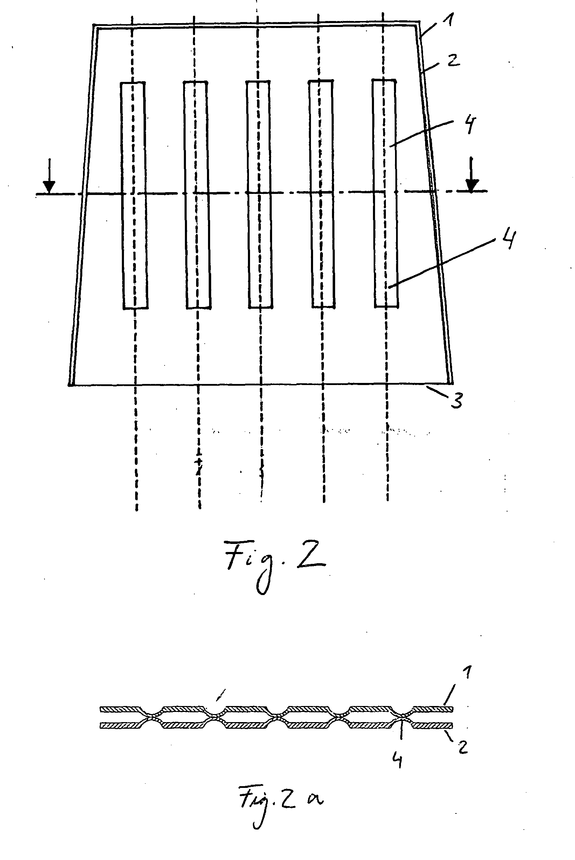

- Fig. 2: eine Draufsicht auf ein Filterelement mit bogenförmigen und flachen Bereichen,
- Fig. 2a: eine Querschnittsansicht des Filterelements gemäß Fig. 2,

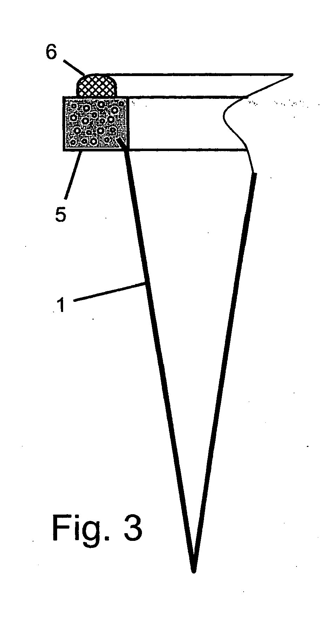

- Fig. 3: eine Anordnung, welche einen Rahmen und ein Filterelement zeigt,

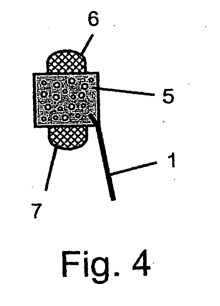

- Fig. 4: ein Traggestell, welchem zwei Dichtungen zugeordnet sind,

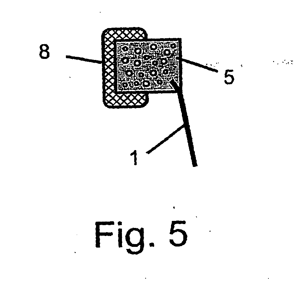

- Fig. 5: ein Traggestell, welchem eine U-förmige Dichtung zugeordnet ist, und

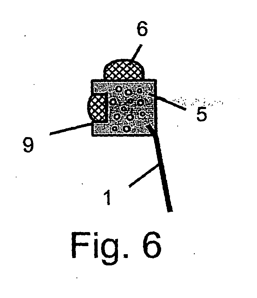

- Fig. 6: ein Traggestell, welches eine Ausnehmung zur Aufnahme einer Dichtung aufweist.

## Patentansprüche

1. Verwendung eines Filterelements in der Tiefenfiltration, wobei das Filterelement, eine erste flächige Lage (1) und eine zweite flächige Lage (2) umfasst, wobei die Lagen (1, 2) miteinander unter Bildung zumindest eines Volumens und zumindest einer Öffnung (3) miteinander verbunden sind, wobei die Lagen (1, 2) durch Mittel (4) voneinander teilweise beabstandet sind, wobei die Mittel (4) aus zumindest einer Lage (1, 2) herausgebildet sind, wobei die Mittel (4) als tiefgezogene Bereiche ausgebildet sind und wobei die Lagen (1, 2) einen progressiven Aufbau aufweisen, so daß in den Filterschichten in einer Richtung zunächst grobe Poren und dann feine Poren vorgesehen sind.

2. Verwendung nach Anspruch 1, **dadurch gekennzeichnet, dass** die Mittel (4) aus beiden Lagen (1, 2) herausgebildet sind.

3. Verwendung nach Anspruch 1 oder 2, **dadurch gekennzeichnet, dass** die Mittel (4) die Lagen (1, 2) zumindest bereichsweise miteinander verbinden.

4. Verwendung nach einem der Ansprüche 1 bis 3, **dadurch gekennzeichnet, dass** die Mittel (4) als flächige Bereiche ausgebildet sind.

5. Verwendung nach einem der Ansprüche 1 bis 4, **dadurch gekennzeichnet, dass** die Mittel (4) als dreidimensionale Strukturen ausgebildet sind, welche aus einer ebenen, flächigen Lage (1, 2) herausragen.

6. Verwendung nach einem der Ansprüche 1 bis 5, **dadurch gekennzeichnet, dass** die Mittel (4) bogenförmig ausgebildet sind.

7. Verwendung nach einem der Ansprüche 1 bis 6, **dadurch gekennzeichnet, dass** die Lagen (1, 2) aus Vliesstoff gefertigt sind.

8. Verwendung nach Anspruch 7, **dadurch gekennzeichnet, dass** der Vliesstoff thermoplastische Fasern umfasst.

9. Verwendung nach Anspruch 7 oder 8, **dadurch gekennzeichnet, dass** der Vliesstoff Aktivkohle oder Aktivkohlegranulat umfasst.

10. Verwendung nach einem der Ansprüche 1 bis 9, **dadurch gekennzeichnet, dass** die Lagen (1, 2) rechteckig oder trapezförmig ausgebildet und an drei Seiten miteinander verbunden sind.

11. Verwendung nach einem der Ansprüche 1 bis 10, **dadurch gekennzeichnet, dass** die Lagen (1, 2) miteinander verschweißt sind.

12. Verwendung nach einem der Ansprüche 1 bis 10, **dadurch gekennzeichnet, dass** die Lagen (1, 2) miteinander verklebt sind.

13. Verwendung eines Filterelements nach einem der voranstehenden Ansprüche in einer Anordnung umfassend das Filterelement und einen Rahmen mit einem Traggestell (5).

14. Verwendung nach Anspruch 13, **dadurch gekennzeichnet, dass** der Rahmen und das Filterelement unlösbar miteinander verbunden sind.

15. Verwendung nach Anspruch 13 oder 14, **dadurch gekennzeichnet, dass** das Filterelement in den Rahmen eingegossen oder eingeschäumt ist.

16. Verwendung nach Anspruch 13 oder 14, **dadurch gekennzeichnet, dass** der Rahmen und das Filterelement einstückig ausgebildet sind.

17. Verwendung nach einem der Ansprüche 13 bis 16, **dadurch gekennzeichnet, dass** dem Traggestell (5) mindestens eine Dichtung (6, 7, 8) zugeordnet ist.

18. Verwendung nach Anspruch 17, **dadurch gekennzeichnet, dass** das Traggestell (5) und die Dichtung (6, 7, 8) einstückig ausgebildet sind.

19. Verwendung nach Anspruch 18, **dadurch gekennzeichnet, dass** die Dichtung (6, 7, 8) als verjüngter Bereich des Traggestells (5) ausgebildet ist.

20. Verwendung nach einem der Ansprüche 13 bis 19, **dadurch gekennzeichnet, dass** mindestens eine Dichtung (6, 7, 8) formschlüssig mit dem Traggestell (5) verbindbar ist.

21. Verwendung nach einem der Ansprüche 13 bis 20, **dadurch gekennzeichnet, dass** das Traggestell (5) eine Ausnehmung (9) zum Einpressen einer Dichtung (6, 7, 8) aufweist.

22. Verwendung nach einem der Ansprüche 13 bis 21, **dadurch gekennzeichnet, dass** das Traggestell (5) aus mindestens einem geschäumten Werkstoff besteht.

23. Verwendung nach einem der Ansprüche 13 bis 21, **dadurch gekennzeichnet, dass** das Traggestell (5) aus mindestens einem spritzgegossenen Werkstoff besteht.

24. Verwendung nach einem der Ansprüche 13 bis 21, **dadurch gekennzeichnet, dass** das Traggestell (5) aus Vliesstoff besteht.

25. Verwendung nach einem der Ansprüche 13 bis 24, **dadurch gekennzeichnet, dass** das Traggestell (5) rechteckig ausgebildet ist.

26. Verwendung nach einem der Ansprüche 13 bis 25, **dadurch gekennzeichnet, dass** das Traggestell (5) Streben umfasst.

## Claims

1. Use of a filter element in depth filtration, wherein the filter element comprises a first sheet-like ply (1) and a second sheet-like ply (2), wherein the plies (1, 2) are connected to each other to form at least one volume and at least one opening (3), wherein the plies (1, 2) are partially spaced apart from each other by means (4), wherein the means (4) are formed from at least one ply (1, 2), wherein the means (4) are formed as deep-drawn regions and wherein the plies (1, 2) have a progressive structure such that initially coarse pores and then fine pores are provided in one direction in the filter layers.

2. Use according to Claim 1, **characterized in that** the means (4) are formed from both plies (1, 2).

3. Use according to Claim 1 or 2, **characterized in that** the means (4) connect the plies (1, 2) to each other at least in certain regions.

4. Use according to one of Claims 1 to 3, **characterized in that** the means (4) are in the form of planar regions.

5. Use according to one of Claims 1 to 4, **characterized in that** the means (4) are in the form of three-dimensional structures which protrude from a planar, sheet-like ply (1, 2).

6. Use according to one of Claims 1 to 5, **characterized in that** the means (4) have an arcuate shape.

7. Use according to one of Claims 1 to 6, **characterized in that** the plies (1, 2) are produced from nonwoven.

8. Use according to Claim 7, **characterized in that** the nonwoven comprises thermoplastic fibres.

9. Use according to Claim 7 or 8, **characterized in that** the nonwoven comprises activated carbon or activated carbon granules.

10. Use according to one of Claims 1 to 9, **characterized in that** the plies (1, 2) are rectangular or trapezoidal and are connected to each other on three sides.

11. Use according to one of Claims 1 to 10, **characterized in that** the plies (1, 2) are welded to each other.

12. Use according to one of Claims 1 to 10, **characterized in that** the plies (1, 2) are adhesively bonded to each other.

13. Use of a filter element according to one of the preceding claims in an arrangement comprising the filter element and a frame with a load-bearing structure (5).

14. Use according to Claim 13, **characterized in that** the frame and the filter element are permanently connected to each other.

15. Use according to Claim 13 or 14, **characterized in that** the filter element is cast or foamed into the frame.

16. Use according to Claim 13 or 14, **characterized in that** the frame and the filter element are formed in one piece.

17. Use according to one of Claims 13 to 16, **characterized in that** at least one seal (6, 7, 8) is assigned to the load-bearing structure (5).

18. Use according to Claim 17, **characterized in that** the load-bearing structure (5) and the seal (6, 7, 8) are formed in one piece.

19. Use according to Claim 18, **characterized in that** the seal (6, 7, 8) is in the form of a tapered region of the load-bearing structure (5).

20. Use according to one of Claims 13 to 19, **characterized in that** at least one seal (6, 7, 8) can be connected in a positively locking manner to the load-bearing structure (5).

21. Use according to one of Claims 13 to 20, **characterized in that** the load-bearing structure (5) has a recess (9) for the pressing-in of a seal (6, 7, 8).

22. Use according to one of Claims 13 to 21, **characterized in that** the load-bearing structure (5) consists of at least one foamed material.

23. Use according to one of Claims 13 to 21, **characterized in that** the load-bearing structure (5) consists of at least one injection-moulded material.

24. Use according to one of Claims 13 to 21, **characterized in that** the load-bearing structure (5) consists of nonwoven.

25. Use according to one of Claims 13 to 24, **characterized in that** the load-bearing structure (5) is rectangular.

26. Use according to one of Claims 13 to 25, **characterized in that** the load-bearing structure (5) comprises braces.

## Revendications

1. Utilisation d'un élément filtrant en filtration en profondeur, dans lequel l'élément filtrant comprend une première couche à deux dimensions (1) et une deuxième couche à deux dimensions (2), sachant que les deux couches (1, 2) sont reliées entre elles par la formation d'au moins un volume et d'au moins une ouverture (3), sachant que les couches (1, 2) sont partiellement écartées l'une de l'autre par des moyens (4), sachant que les moyens (4) sont formés par au moins une couche (1, 2), sachant que les moyens (4) sont formés comme des zones embouties et sachant que les couches (1, 2) présentent une structure progressive de façon à ce que dans les couches filtrantes, dans un sens, des pores grossiers soient d'abord prévus puis des pores fins.

2. Utilisation selon la revendication 1, **caractérisée en ce que** les moyens (4) sont formés des deux couches (1, 2).

3. Utilisation selon la revendication 1 ou 2, **caractérisée en ce que** les moyens (4) relient les couches (1, 2) entre elles au moins par endroits.

4. Utilisation selon l'une des revendications 1 à 3, **caractérisée en ce que** les moyens (4) sont formés comme des zones à deux dimensions.

5. Utilisation selon l'une des revendications 1 à 4, **caractérisée en ce que** les moyens (4) sont formés comme des structures en trois dimensions qui font saillie d'une couche plane à deux dimensions (1, 2).

6. Utilisation selon l'une des revendications 1 à 5, **caractérisée en ce que les moyens (4) sont arqués.**

7. Utilisation selon l'une des revendications 1 à 6, **caractérisée en ce que** les couches (1, 2) sont fabriquées en non-tissé.

8. Utilisation selon la revendication 7, **caractérisée en ce que** le non-tissé comprend des fibres thermoplastiques.

9. Utilisation selon la revendication 7 ou 8, **caractérisée en ce que** le non-tissé comprend du charbon actif ou des granulés de charbon actif.

10. Utilisation selon l'une des revendications 1 à 9, **caractérisée en ce que** les couches (1, 2) sont rectangulaires ou trapézoïdales et reliées entre elles sur trois côtés.

11. Utilisation selon l'une des revendications 1 à 10, **caractérisée en ce que** les couches (1, 2) sont soudées entre elles.

12. Utilisation selon l'une des revendications 1 à 10, **caractérisée en ce que** les couches (1, 2) sont collées entre elles.

13. Utilisation selon l'une des revendications précédentes dans un agencement comprenant l'élément filtrant et un cadre avec un châssis porteur (5).

14. Utilisation selon la revendication 13, **caractérisée en ce que** le cadre et l'élément filtrant sont reliés entre eux sans pouvoir être séparés.

15. Utilisation selon la revendication 13 ou 14, **caractérisée en ce que** l'élément filtrant est coulé ou moussé dans le cadre.

16. Utilisation selon la revendication 13 ou 14, **caractérisée en ce que** le cadre et l'élément filtrant sont monoblocs.

17. Utilisation selon l'une des revendications 13 à 16, **caractérisée en ce que** le châssis porteur (5) possède au moins un joint (6, 7, 8).

18. Utilisation selon la revendication 17, **caractérisée en ce que** le châssis porteur (5) et le joint (6, 7, 8) sont monoblocs.

19. Utilisation selon la revendication 18, **caractérisée en ce que** le joint (6, 7, 8) est formé comme une zone rétrécie du châssis porteur (5).

20. Utilisation selon l'une des revendications 13 à 19, **caractérisée en ce qu'**au moins un joint (6, 7, 8) peut être relié au châssis porteur (5) par complémentarité de forme.

21. Utilisation selon l'une des revendications 13 à 20, **caractérisée en ce que** le châssis porteur (5) présente un creux (9) pour l'insertion d'un joint (6, 7, 8) par compression.

22. Utilisation selon l'une des revendications 13 à 21, **caractérisée en ce que** le châssis porteur (5) est composé d'au moins un matériau moussé.

23. Utilisation selon l'une des revendications 13 à 21, **caractérisée en ce que** le châssis porteur (5) est composé d'au moins un matériau moulé par injection.

24. Utilisation selon l'une des revendications 13 à 21, **caractérisée en ce que** le châssis porteur (5) est en non-tissé.

25. Utilisation selon l'une des revendications 13 à 24, **caractérisée en ce que** le châssis porteur (5) est rectangulaire.

26. Utilisation selon l'une des revendications 13 à 25, **caractérisée en ce que** le châssis porteur (5) comprend des entretoises.
